**Europäisches Patentamt**

**European Patent Office**

**Office européen des brevets**

(19)

(11) Publication number : **0 501 832 A2**

(12) # EUROPEAN PATENT APPLICATION

(21) Application number : **92301744.6**

(22) Date of filing : **28.02.92**

(51) Int. Cl.⁵ : **G09G 3/00**

(30) Priority : **01.03.91 US 663742**

(43) Date of publication of application :
**02.09.92 Bulletin 92/36**

(84) Designated Contracting States :
**DE GB NL**

(71) Applicant : **SUN MICROSYSTEMS, INC.**
**2550 Garcia Avenue**
**Mountain View, CA 94043 (US)**

(72) Inventor : **Davidson, Howard**
**59 Club Drive**
**San Carlos, California 94070 (US)**

(74) Representative : **Wombwell, Francis**
**Potts, Kerr & Co. 15, Hamilton Square**
**Birkenhead Merseyside L41 6BR (GB)**

(54) **High resolution colour computer display to be worn on the head of an operator.**

(57) An arrangement for displaying the output of an electronic system such as a computer including a light gate array having at least one column of polarizable light windows, apparatus for providing a light source to the windows of a column, apparatus for polarizing the light furnished to each of said windows from each of said light sources in a first sense, apparatus for selectively varying the characteristics of the windows of the light gate array to rotate the polarization of light transferred therethrough, apparatus for transferring light furnished through the windows of one polarization and blocking light of another polarization, and apparatus for scanning the light transferred by the windows for viewing to focus at points defining columns of pixels.

FIG. 1

EP 0 501 832 A2

## Field Of The Invention

This invention relates to computer displays and, more particularly, to a high resolution color display to be worn by the operator.

## History Of The Prior Art

There have been a number of computer displays devised to be worn on the head of the operator. One advantage of such a display is that it takes very little room. Another advantage is that it may usually be viewed with one eye so that the view in the display may be superimposed on the background provided by the operator's surroundings. Such a display may also allow a great deal of movement by the operator. Moreover, the view provided by such a display is typically private to the operator. For these and other reasons, so called "heads up" displays have been designed.

Typically, head mounted displays offer limited capabilities. For example, one such display manufactured and sold by Reflection Technology, Waltham, Massachusetts, offers what would be called a monochrome picture, a single red color of characters displayed against a black background. Red is the color used because the display is created by projecting an image created by light emitting diodes onto a mirror which scans the image in front of the eye. Although red light emitting diodes are inexpensive and provide a good image, it has not been possible to construct a color display using red, green, and blue diodes because suitable blue light emitting diodes are not available.

Not only are inexpensive color head mounted displays unavailable, the available displays do not include a gray scale capability and their resolution is quite low. For example, the above-mentioned display provides a picture which is 280 lines by 720 columns. The resolution is limited because the light emitting diodes used in the display offer a relatively crude method of defining the individual pixels to be displayed.

In order to be acceptable for use with the typical desktop computer such as a work station, a head mounted display should offer the same advantages as a typical work station display. The typical display used with a work station offers a color or a gray scale picture at a resolution of approximately one thousand by one thousand pixels.

## Summary Of The Invention

It is, therefore, an object of the present invention to provide an improved head mounted display.

It is another object of the present invention to provide a head mounted color display.

It is another object of the present invention to provide a high resolution head mounted display.

It is yet another object of the present invention to provide a head mounted display capable of providing gray scale output.

It is yet another object of the present invention to provide a display mechanism useful for head mounted displays, rear projection displays, and front projection displays.

These and other objects of the present invention are realized in an arrangement for displaying the output of an electronic system such as a computer comprising a light gate array having at least one column of polarizable light windows, means for providing a light source to the windows of a column, means for polarizing the light furnished to each of said windows from each of said light sources in a first sense, means for selectively varying the characteristics of the windows of the light gate array to rotate the polarization of light transferred therethrough, means for transferring light furnished through the windows of one polarization and blocking light of another polarization, and means for scanning the light transferred by the windows for viewing to focus at points defining columns of pixels.

In alternative embodiments of the invention, three columns of windows may be used with three colors to obtain a color display or a white light source can be used with a single column of windows to provide a monochrome gray scale display.

These and other objects and features of the invention will be better understood by reference to the detailed description which follows taken together with the drawings in which like elements are referred to by like designations throughout the several views.

## Brief Description Of The Drawings

Figure 1 is a pictorial view of a head mounted display constructed in accordance with the present invention.

Figure 2 is a general view of the layout of a light gate assembly constructed in accordance with the invention.

Figure 3 is a detailed view of a portion of a substrate used to produce the light gate assembly as illustrated in Figure 2.

Figure 4 is a cross section of a detail of the substrate illustrated in Figure 3.

## Detailed Description Of The Invention

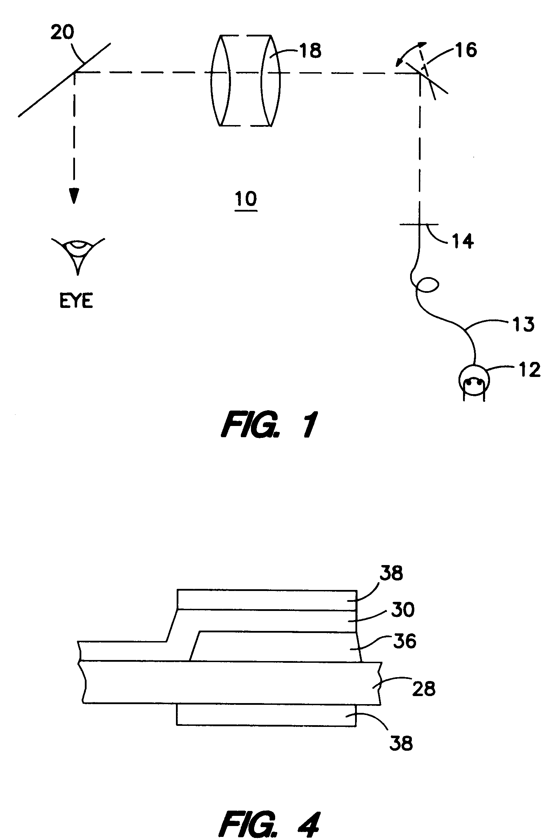

Referring now to Figure 1 there is shown a pictorial view of a head mounted display 10 constructed in accordance with the present invention. The display 10 includes a source of light such as a incandescent lamp 12. In order to conveniently provide white light from the source, an arrangement such as a fiber optics cable 13 may be arranged to receive the white light output and transfer it to a light gate assembly 14. The light gate assembly 14 filters the white light and provides light of the three primary colors red, green, and blue for generating all of the colors necessary for each pixel to be presented on a colour output display. In an alternative embodiment, white light of different intensities may be transferred by the light gate assembly 14 without filtering to produce a gray scale display.

In particular, the light gate assembly 14 provides a column which in the preferred embodiment may include 1024 pixels each composed of red, green, and blue light. The individual pixels of each row of the column are sequentially provided at each position of the column from a frame buffer associated with the output of a computer in a manner well known to the prior art. These pixels are beamed to a scan mirror 16 which moves an incremental amount with each pixel until a distance has been traversed equivalent to the length of a row. In a preferred embodiment of the invention, a row may consist of 1280 pixels so that a resolution of 1280 by 1024 is realized. At each individual traverse of the scan mirror 16, all of the rows of pixels are displayed, each pixel of each row appearing in sequence. That is, all of the pixels in a column (1024 in the preferred embodiment) are presented at each incremental mirror position; then the scan mirror moves to the next succeeding pixel position and all of the pixels in that column are presented.

At each pixel position in the column, the appropriate light values of red, green, and blue are generated and combined by projection to the same point to create the desired color at the pixel position. The individual colors are projected in sequence as the scan mirror moves but are arranged to project to the same point. This takes place until all of the columns have been displayed and an entire pictures is displayed. This operation is in contrast to the display presented by a cathode ray display in which the pixels of a first row are scanned in succession to the display followed by the pixels of the next succeeding row until all of the rows of the display have been presented. The present invention thus requires that the circuitry for scanning information in a frame buffer scan information in all rows to be displayed in parallel and complicates the design of the circuitry to some extent. One way to accomplish this is to place the values of the time offsets for the display of each column in the frame buffer with the address, offset by the required pixel delays. Alternatively, the offset addresses may be generated during readout of the information to be displayed from the frame buffer.

An important distinction of the present invention is that all of the three colors constituting a pixel are projected to the same point rather than to a triangle (or a line) as with present cathode ray tubes. This method of forming a color pixel provides much greater resolution than do cathode ray tubes.

In a preferred embodiment of the invention, the scan mirror 16 rotates first in one direction about its axis and then in the opposite direction. In order to make best use of the information available, the reverse path of the scan mirror 16 may be utilized to describe the display but starting from the other side of the displayed picture and preceding in the opposite direction. This may be accomplished by incrementing the frame buffer address generator during the forward scan and decrementing it during the reverse scan while maintaining the address offsets mentioned above.

In order to allow the scan mirror 16 to accomplish its movement, the mirror may be mounted upon one tine of a tuning fork, with a counterweight matched in inertia to the mirror on the other tine. If a voice coil driver is constructed by mounting a drive coil on one tine and a magnet on the other, it is possible to drive the fork at its resonant frequency to provide the required scan motion. By balancing the mirror and counterweight, the reaction force into the mounting structure is effectively cancelled. This prevents coupling of the scan motion into the structure of the display. Such an arrangement is used in the Reflection Technology display referred to above.

The light beamed by the scan mirror 16 is focused by a lens assembly 18 and directed at a folding mirror 20. The folding mirror 20 directs the light to the eye of the wearer of the display 10 to present the picture. In one embodiment of the invention, the folding mirror 20 may be semi-transparent so that it provides a "look through" mode of operation which may be turned on and off through the use of a liquid crystal shutter 21

Because no cathode ray tube surface exists on which the pixels are displayed, the persistence of the eye controls how rapid the scan must be. In a preferred embodiment of the invention, a mirror scan rate of 50 Htz. is realized. The mirror motion is sinusoidal. The beginning and end of each partial rotation are eliminated from the time during which data is displayed in order to select the relatively linear portion of the mirror swing.

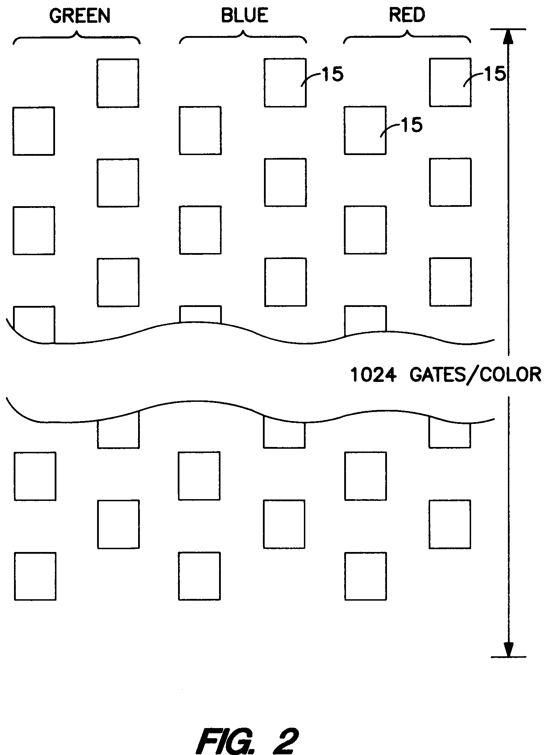

Figure 2 illustrates, in general, the layout of a light gate assembly constructed in accordance with the invention. As may be seen in Figure 2, the light gate 14 is comprised of six columns of what amount to individual windows 15 through which light may be shown. Two adjacent ones of these columns furnish green light through each window, two furnish blue light, and two furnish red light. The two columns of each color are arranged to be separated by an amount which is an integer multiple of the width of one gate. This is done for convenience in timing. This space is sufficient to allow conductors to be placed in a convenient manner to operate the windows. By selecting the interval at which each window 15 is displayed to match the rate of scan of the mirror 16, the two columns which represent a single color made be made to appear in the same column. By offsetting the two columns at the windows 15, however, the top and bottom edges of the adjoining pixels in a column are aligned, so that essentially complete coverage is obtained. Moreover, by offsetting all six columns by the same amount, the windows of all three colors may easily be made to focus at the same point on the eye to produce the appropriate column of color pixels.

An alternative arrangement of a light gate would utilize a single column of windows and beam white light through the column of windows to provide a gray scale display. If desired, two columns may be used in order to more closely position the pixels in any column as is explained above.

In order to obtain intensity variations, the time, TP, during which any pixel is displayed is subdivided into 256 parts in the preferred embodiment. This may be accomplished by an eight bit register for each window. The register holds a value determining the length for the display of the particular color. In general, the six individual columns are separated or offset in the preferred embodiment by a distance which is scanned by the mirror 16 in a time equal to 2 x 256 TP. In this manner, all of the colors of a pixel may be precisely superimposed upon one another.

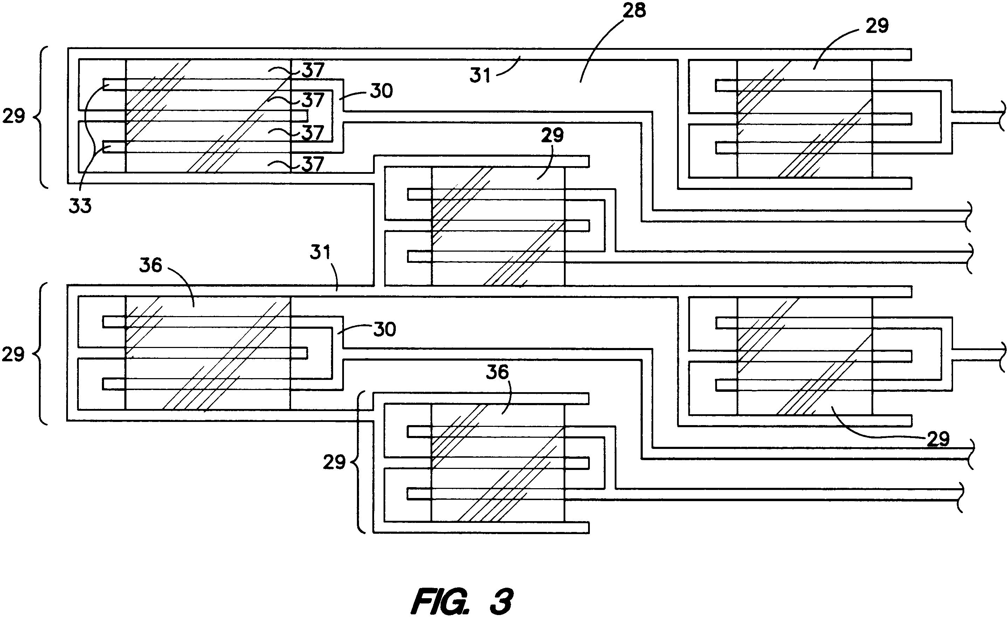

In order to provide an arrangement for opening and closing each of the windows, the system of Figures 3 and 4 is provided. Figure 3 illustrates a number of windows 29 from three of the six columns of windows illustrated in Figure 2. To define the entire pattern of windows 29 illustrated in Figure 3 a polarization rotating material 36 may be deposited on a transparent substrate 28 such as fused quartz. For example, lead lanthanum zirconate titanate is known to offer electrical field controlled polarization rotation and may be so deposited. A material called "PMN", a lead-magnesium-niobium based ceramic doped with titanium offers similar properties. The pattern defining each window 29 also includes a first series of interconnected metal lines 30 and a second series of interconnected metal lines 31. The strips of metal lines 30 and 31 illustrated in Figure 3 are strips of conductive material laid on the substrate and over the material 36 to act as conductors. In the embodiment illustrated in Figure 3, the lines 31 are formed in the shape of an "E". Fingers 33 of the lines 30 project into the open spaces between the horizontal arms of the "E".

The polarization rotating material under the metal lines 30 and 31 covers the open spaces between the fingers 33 and the horizontal arms of the "E". When appropriate voltages are applied to the lines 30 and 31, a field is established between the fingers 33 and the horizontal arms of the "E" of the individual windows 29 causing the plane of polarization of the light passing through the material within the slots 37 to rotate by ninety degrees with respect to the plane of polarization of the input light. On the other hand, when the voltages applied to the lines 30 and 31 are removed, the plane of polarization of the light passing through the material 36 within the slots 37 with respect to the input light is unchanged.

In order to utilize this ability to change polarization, the window is arranged with other polarizers. For example, in a preferred embodiment of the invention, polarizing filters 38 are placed on both sides of the substrate 28. Light shining on the material 36 must pass through a first one of these polarizers and assume a first polarization. The voltage field created at the window in the condition in which light is transmitted is such that the plane of polarization of the polarized incoming light is rotated at ninety degrees from the first polarization which makes it parallel to the plane of polarization through the second polarizer. Thus, in a first condition of the material 36, light of this first polarization is rotated by the material 36 and passed to the output polarizer 38 which is aligned to allow the rotated light to pass through.

In the off or second condition of the material 36, no voltage is applied to the electrodes; the plane of polarization of the incoming polarized light is not rotated. Consequently, the polarization of the light of the first polarization is not rotated by the material 36, and the light is thus blocked by the output polarizer 38.

Colored filters may be provided on top of each window 29 to derive the required colors from a white light source. Alternatively, colored light sources may be used to provide the three colors of light.

As may be seen in Figure 3, the dimensions of the arrays of windows are such that the openings between fingers 33 and the arms of the "E" of adjacent windows in a column essentially touch one another. That is, the bottom edge of the lowest opening 37 of the upper left hand window lies at the same horizontal position as the top edge of the upper opening in the top window of the central column. If these two columns are assumed to carry the same filtered color, then the pixels of this color touch one another when a column is displayed in the manner discussed above.

Moreover, the individual ones of the six columns are precisely and closely aligned so that they may be focused to a single point on the eye as the mirror 16 scans. In fact, the registration provided by the present invention is much more precise than can be attained in the usual cathode ray tube displays. The individual windows are adapted to be prepared by photolithographic processes in the manner in which arrays of semiconductors are prepared. Consequently, each window is very accurately placed. This allows registration to be easily maintained without deviation as all the light gates in an array are made simultaneously from a precisely aligned master mask.

The process for fabricating the light gates used in this invention is quite simple and produces a high yield. A film of lead lanthanum zirconate titanate is deposited onto a high temperature glass or fused quartz substrate. This may be done by metal organic chemical vapor deposition; by sputtering; or by a "sol-gel" process in which a liquid is spin coated onto a surface, converted to a gel, and fired. A typical film thickness is seven microns. The film is typically annealed at 650 degrees C for good grain growth. The film is etched into rectangular islands of material 36, and metal electrodes 30 and 31 are applied by sputter deposition and photoetching. The yield should be very high because the process requires only two non-critical masks and has no critical alignments. All of the techniques used for the manufacture of the light gate are well known to those skilled in the art of producing semiconductor integrated circuits.

The light gate array for a 1024 row display will have 3072 connections for individual windows, and one or more common ground connections. The pads may be on a vertical pitch of 25 microns in the preferred implementation. This is a large number of connections which would be difficult, if not impossible, to attain using traditional wire-bonding methods.

In the preferred implementation, the light gate array is connected to the driver chips by placing the array in a close fitting hole in a ceramic carrier. The array may be secured in the hole with an adhesive so that the upper face of the array is coplanar with the upper face of the carrier. The driver and control chips may also be placed in cavities in the carrier so that their front surfaces are coplanar with the carrier. A sheet of polymer may be laminated to the front of the array and carrier, or a polymer may be cast over the surface. Holes may than be cut in the polymer by a laser, or plasma etching, to expose the bond pads.

A metal film may then be applied to the polymer by sputter deposition. If desired, the film may be thickened by electroplating. This film may then be patterned by photolithography to produce the desired connections between the light gate array and the driver chips. This process is compatible with a process developed by General Electric called HDI.

Alternatively, solder bumps may be applied to the bond pads of the light gate array and to the bond pads of the driver and control chips. The necessary connections may be patterned in a metal film on a glass carrier, and the light gate array and chips connected to the appropriate pads on the carrier by reflow soldering.

The display described in this specification is well adapted to be used for providing large screen projections by simply increasing the intensity of the light used and arranging the scan mirror and focusing apparatus to project the light onto an arrangement such as a screen. In such a case, it might be desirable to utilize a mirror which spins about an axis to accomplish the projection rather than an oscillating mirror so that linearity compensation is not required.

Although the present invention has been described in terms of a preferred embodiment, it will be appreciated that various modifications and alterations might be made by those skilled in the art without departing from the spirit and scope of the invention. The invention should therefore be measured in terms of the claims which follow.

## Claims

1. An arrangement for displaying the output of an electronic system such as a computer comprising a light gate array having at least one column of light windows, means for providing a light source to the windows of a column, means for polarizing the light furnished to each of said windows from each of said light sources in a first sense, means for selectively varying the characteristics of the windows of the light gate array to rotate the polarization of light transferred therethrough, means for transferring light furnished through the windows of one polarization and blocking light of another polarization, and means for scanning the light transferred by the windows for viewing to focus at points defining columns of pixels.

2. An arrangement for displaying the output of an electronic system as claimed in Claim 1 in which the light gate array has at least two columns of light windows for the source of light.

3. An arrangement for displaying the output of an electronic system as claimed in Claim 1 in which the means for providing a light source comprises a source of white light, and a filter for providing a desired color.

4. An arrangement for displaying the output of an electronic system as claimed in Claim 3 in which the means for providing a light source comprises a fiber optics cable from the source of white light to the light window.

5. An arrangement for displaying the output of an electronic system as claimed in Claim 1 in which the means for providing a light source comprises a source of light of a desired color.

6. An arrangement for displaying the output of an electronic system as claimed in Claim 5 in which the means for providing a light source comprises a fiber optics cable from the source of light to the light window.

7. An arrangement for displaying the output of an electronic system as claimed in Claim 1 in which the means for polarizing the light through each of said windows from each of said light sources in a first sense comprises polarizing filters placed so that light through the windows passes through the filters.

8. An arrangement for displaying the output of an electronic system as claimed in Claim 7 in which the means for transferring light furnished through the windows of one polarization and blocking light of another polarization comprises a second polarizing filter are placed to receive light from each of the light windows.

9. An arrangement for displaying the output of an electronic system as claimed in Claim 1 in which the means for selectively varying the characteristics of the windows of the light gate array to rotate the polarization of light transferred therethrough comprises electrical field controlled polarizing means.

10. An arrangement for displaying the output of an electronic system as claimed in claim 9 in which each light window comprises a base of transparent substrate material, and the electrical field controlled polarizing means comprises a layer of lead lanthanum zirconate titanate coated on the substrate material.

11. An arrangement for displaying the output of an electronic system as claimed in Claim 1 in which the means for scanning the light from the light source transferred by the windows for viewing to focus at single points defining columns of pixels comprises a scanning mirror, means for focusing light from the light windows on the scanning mirror, and means for focusing light from the scanning mirror on an eye of a wearer of the arrangement for displaying the output of an electronic device.

12. An arrangement for displaying the output of an electronic system as claimed in Claim 11 in which all pixels of each column of pixels are scanned at the same time.

13. An arrangement for displaying the output of an electronic system such as a computer comprising a light gate array having at least one column of light windows, means for providing a light source of a first color to the windows of a column, means for providing a light source of a second color to the windows of a column, means for providing a light source of a third color to the windows of a column, means for polarizing the light furnished to each of said windows from each of said light sources in a first sense, means for selectively varying the characteristics of the windows of the light gate array to rotate the polarization of light transferred therethrough, means for transferring light furnished through the windows of one polarization and blocking light of another polarization, and means for scanning the light from the three light sources transferred by the windows for viewing to focus at single points defining columns of pixels.

14. An arrangement for displaying the output of an electronic system as claimed in Claim 13 in which the light gate array has at least one column of light windows for each of said sources of light.

15. An arrangement for displaying the output of an electronic system as claimed in Claim 13 in which the light gate array has at least two columns of light windows for each of said sources of light.

16. An arrangement for displaying the output of an electronic system as claimed in Claim 13 in which each of the means for providing a light source comprises a source of white light, and a filter for providing the desired color.

17. An arrangement for displaying the output of an electronic system as claimed in Claim 16 in which each of the means for providing a light source comprises a fiber optics cable from the source of white light to the light window.

18. An arrangement for displaying the output of an electronic system as claimed in Claim 13 in which each of the means for providing a light source comprises a source of light of the desired color.

19. An arrangement for displaying the output of an electronic system as claimed in Claim 18 in which each of the means for providing a light source comprises a fiber optics cable from the source of light to the light window.

20. An arrangement for displaying the output of an electronic system as claimed in Claim 13 in which the means for polarizing the light through each of said windows from each of said light sources in a first sense comprises a polarizing filter placed so that light through the window passes through the filter.

21. An arrangement for displaying the output of an electronic system as claimed in Claim 20 in which the means for transferring light furnished through the windows of one polarization and blocking light of another polarization comprises a second polarizing filter are placed to receive light from each of the light windows.

22. An arrangement for displaying the output of an electronic system as claimed in Claim 13 in which the means for selectively varying the characteristics of the windows of the light gate array to rotate the polarization of light transferred therethrough comprises electrical field controlled polarizing means.

23. An arrangement for displaying the output of an electronic system as claimed in Claim 22 in which each light window comprises a base of transparent substrate material, and the electrical field controlled polarizing means comprises a layer of lead lanthanum zirconate titanate coated on the substrate material.

24. An arrangement for displaying the output of an electronic system as claimed in Claim 13 in which the means for scanning the light from the three light sources transferred by the windows for viewing to focus at single points defining columns of pixels comprises a scanning mirror, means for focusing light from the light windows on the scanning mirror, and means for focusing light from the scanning mirror on an eye of a wearer of the arrangement for displaying the output of an electronic device.

25. An arrangement for displaying the output of an electronic system as claimed in Claim 24 in which all pixels of each column of pixels are scanned at the same time.

26. An arrangement for displaying the output of an electronic device such as a computer comprising a light gate array having at least three columns of light windows arranged side by side, means for providing color filters of a first color for the windows of one column, means for providing color filters of a second color for the windows of a second column, means for providing color filters of a third color for the windows of a third column, means for providing light to each of said windows, means for polarizing the light furnished to each of said windows in a first sense, means for selectively varying the polarization of light transferred through the windows of the light gate array, polarizing means for receiving the light transferred through the windows of the light gate array, and means for scanning the light transferred by the windows for viewing.

FIG. 1

FIG. 4

FIG. 2

**FIG. 3**

EP 0 501 832 A2